Europäisches Patentamt

European Patent Office

Office européen des brevets

(11) Publication number: **0 155 923**
A2

# (12) EUROPEAN PATENT APPLICATION

(21) Application number: **85850095.2**

(22) Date of filing: **18.03.85**

(51) Int. Cl.⁴: **A 01 G 31/02**

(30) Priority: **20.03.84 SE 8401525**

(43) Date of publication of application:
**25.09.85 Bulletin 85/39**

(84) Designated Contracting States:
**AT BE CH DE FR GB IT LI NL**

(71) Applicant: **Ohlson, Kurt Lennart**
**Harvägen 3B**
**S-178 00 Ekerö(SE)**

(72) Inventor: **Ohlson, Kurt Lennart**
**Harvägen 3B**
**S-178 00 Ekerö(SE)**

(74) Representative: **Lindblom, Erik J.**
**Caroline Östbergs väg 5**
**S-122 35 Enskede(SE)**

(54) A plant propagator and/or germination device.

(57) A device (1) for producing plant germs and/or sprouts comprises a container (2) open at one end thereof, and a perforated cover means (3) adapted to fit the open end of the container. The cover means (3) has a conical shape, with the cone apex arranged to face in towards the container (2). The cone surface (5) facing away from the container comprises a plurality of concentrically related edge portions (5a, 5b) having mutually adjacent edge portions formed by surfaces diverging from the container and intermediate edge portions formed with holes or slots.

Fig. 1

Croydon Printing Company Ltd.

EP 0 155 923 A2

TITLE OF THE INVENTION    A Plant Propagator and/or
                          Germination Device

TECHNICAL FIELD

The present invention relates to a device intended for promoting the growth of and formation of a host of plant germs and/or sprouts. The germ and sprouts are produced from seed, such as alfalfa, wheat grain and the like. The device comprises a container which is open at one end thereof, or also in certain cases at both ends thereof, and a perforated cover means or lid which can be fitted to one or both open ends of the container.

For the sake of simplicity solely plant germs are referred to in certain passages of the following description. Further, the illustrated embodiment only illustrates a container which is open at one end thereof.

BACKGROUND ART

It is previously known to use in the growing of edible germs (and/or sprouts) rich in vitamin and protein a device having the form of a container open at one end thereof, normally a glass container, with which the open end of the container is covered with a water-permeable cloth or fabric.

When preparing and forming germs with such a device, it is necessary to supply water to the container and remove water therefrom in accordance with a given pattern, this being effected in practice by permitting water to pass through the fabric cover. The water is removed from the container after a given period of time has lapsed, which is effected in practice by filtering the water enclosed in the container through the fabric cover. This supply of water to and removal of water from the container is repeated a number of times during the preparatory and growth period of the germs.

DISCLOSURE OF THE PRESENT INVENTION

TECHNICAL PROBLEM

In the growing of germs with the aid of a device of the aforedescribed kind it has been found problematic from a technical aspect to provide such conditions that water can be supplied to the container effectively and rapidly, while also enabling the water enclosed in the container to be removed therefrom quickly without it being necessary to remove seed or germs from the container.

Another technical problem is one of providing . conditions whereby the perforated cover means may be given a form such as to greatly facilitate rapid filling of the container with water, and to provide the cover means with holes so formed that when water is removed from the container seed and/or germs can only penetrate the holes with great difficulty and/or seal or fasten in the holes.

Another technical problem in this respect is one of providing such a cover means which will hold seed and/or germs and/or sprouts enclosed in the container away from the holes so that the water is better able to run from the container when emptying the same.

Another technical problem is one of providing conditions in respect of the inner surface of the cover means that when the container and cover means are placed upside down, the water contained in the container is able to escape quickly therefrom, it being particularly important that all of the water contained is removed, so that no residual water collection of capilliary forces can remain at the edge portions of the cover means.

Consequently, another qualified technical problem is one of creating conditions whereby, even in the case of small residual collections of water in the vicinity of the deepest parts of the cover means, in an inverted position of the container, the properties of the cover means are such that even this small water collection can be removed from the container effectively and rapidly.

SOLUTION

The present invention provides a solution to the aforementioned problems by proposing a device which is intended for forming and producing germs and/or sprouts and which comprises a container which is open at one or both ends thereof and a perforated cover means which can be adapted to the open end of the container.

In accordance with the present invention the cover means has a conical configuration with the apex of the cone arranged to face towards the container, so as to obtain a funnel shape when seen from without.

It is also proposed that the surface of the cone remote from the container comprises a plurality of concentrically related edge portions with mutually adjacent edge portions forming surfaces diverging from the container and form said edge portions. It is also proposed that the surface of the cone facing the container comprises a plurality of radially extending ribs, preferably 12 in number, with each alternate rib being shorter than its adjacent rib.

In order to provide effective emptying of the whole liquid content of the container, when turning the container upside down, it is proposed that the surface of the cone facing the container which is located adjacent the periphery of the cover means or which lies deepest in the container comprises a water-wetable surface.

In order to provide a stackable device it is proposed that discrete support means are provided peripherally around the cone surface facing the container. The outer surface of the support means can be arranged to co-act with a sealing cover means and the inner surface of the support means can be adapted to co-act with the bottom of a further container.

The cone angle is preferably between 80 and 160$^{\circ}$, suitably about 120$^{\circ}$.

By producing each container from a transparent material, the sprouts may be permitted to stand in bright surroundings, so that young leaves can develop chlorophyll and therewith a green colour.

ADVANTAGES

Those advantages primarily characteristic of a device according to the invention reside in the ease in which water can be introduced into the container through the cover means in combination with the ease in which water can be emptied from the container without needing to remove the cover means or the contents of the container, irrespective of whether the container holds solely seed or germs and/or sprouts are completely or only partially developed.

The primary characteristic features of a device according to the present invention are set forth in the characterizing clause of the following Claim 1.

## BRIEF DESCRIPTION OF THE DRAWING

An embodiment at present preferred and exhibiting the characteristics significant of the present invention will now be described in more detail with reference to the accompanying drawing, in which

Figure 1 is a perspective view of solely the device;

Figure 2 illustrates in a sequence "A"-"F" certain procedural steps in the production or formation of germs and/or sprouts with the aid of a device according to Figure 1;

Figure 3 is a sectional view of a cover means forming part of the device according to the present invention, and

Figure 4 is a part view, in somewhat larger scale, of the cover means illustrating in Figure 3.

## DESCRIPTION OF AN EMBODIMENT AT PRESENT PREFERRED

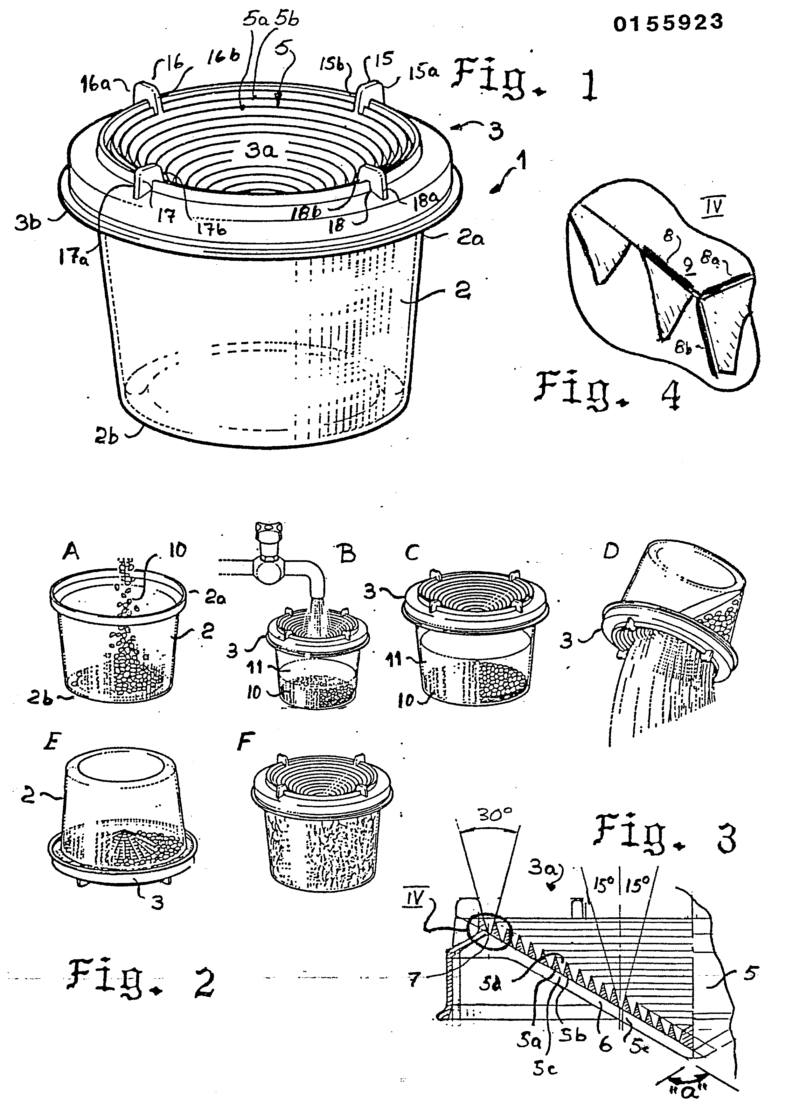

Figure 1 is a perspective view of a device 1 intended for growing or germinating germs and/or sprouts, the device comprising a container 2 which is open at one end thereof, and a perforated cover means 3 adapted to fit the open end 2a of the container.

The cover means 3 has a conical shape 3a with the apex of the cone arranged to face in towards the container 2, so that the cover means obtains a funnel shape. The cover means 3 is also provided with a rim 3b intended to encircle the open end 2a of the container.

The cultivation of germs and/or sprouts is preferably effected in the manner illustrated in Figure 2 with the procedural steps "A"-"F".

The seed to be placed in the container is first sorted, and damaged and discoloured seed removed. The seed used may be wheat grain, alfalfa (lucerne), lentil, soya beans and the like. This seed has been referenced 10 in Figure 2 "A" and is placed in the container 2, which rests on its bottom 2b. The cover means 3 is then fitted over the open end 2a of the container 2 and water is poured into the container, as shown in Figure 2"B".

The seed 10, now immersed in water 11 as shown in Figure 2"C", is allowed to stand from 8 to 12 hours with four parts water and one part seed. The water is then filtered-off through the cover means 3, in the manner shown in Figure 2"D", it being important that seed is not able to pass through the holes in the cover means, nor yet block the holes.

In order to completely empty the container of its water content it is proposed that the container 2 is turned upside down, as illustrated in Figure 2"E", such that all water drains from the container.

The seed is then rinsed again and water permitted to run-off efficiently, so that no water remains, this procedure being repeated from two to three times each day. In order to ensure that residual water is also effectively removed, it is suggested that the container is placed in the position illustrated in Figure 2"E".

After three to five days the seed enclosed in the container will have grown into sprouts and/or germs which are ready to eat, as illustrated in Figure 2"F". The germs and/or sprouts can be stood for some hours in light surroundings, so that the young and tender leaves develop chlorophyll and obtain a light green colour. This can either be effected by placing the container in front of a window or irradiating the same with electric light.

Figure 3 is a part-section view of the cover means 3 illustrated in Figure 2.

As will be seen from Figure 3, the surface 5 of cone 3a remote from the container 2 comprises a plurality of concentrically related edge portions 5a, 5b having mutually adjacent surfaces which diverge from the container 2 at an angle of approximately 30° to form edge portions. This cover-means form facilitates filling of the container with water, partly because the whole of the cover means obtains the form of a funnel and partly because there has been formed in the cover means a plurality of funnel-shaped openings, in the illustrated embodiment with a plurality of concentrical slots, and the hole or slots 5c are adapted so as to render it difficult for seed and germs to penetrate theretrough or fasten therein from inside the container.

The cone surface facing the container is smooth and also comprises a plurality of radially extending ribs 6 which are preferably uniformly spaced and twelve in number, with each alternate rib being shorter than an adjacent rib.

That surface of the cone facing the container 2 located adjacent the periphery 7 of the cover means and here referenced IV, and shown in larger scale in Figure 4, comprises one or more water-wetable surfaces 8, 8a and 8b, so that when the cover means is upside down, as shown in Fig. 2"E", terminal water collections in the space 9 will immediately run along the surface 8b, therewith to drain-off the entire water content of the container. The cone surface remote from the container 2 has arranged around the periphery thereof a plurality of discrete supports 15,16,17 and 18, in which the outer surface 15a, 16a, 17a, 18a of respective supports is adapted to co-act with a tightly-closing cover means (not shown in the figure) while the inner surface 15b, 16b, 17b, 18b of respective supports is adapted to co-act with a bottom part 2b of a further container 2, thereby enabling the containers to be stacked one upon the other.

The cone angle "a" is between 80 and 160°, preferably about 120°.

The container 2 is preferably made of a transparent plastics material, thereby enabling the germs growing in the container to be exposed to light.

The cover means comprises a plastics unit molded in one piece and has a smooth inner surface with closely arranged slots or grooves, while the outer surface of the cover means presents funnel-shaped grooves or slots with now planar surfaces.

The ribs, in the form of beams 6 are intended, in addition to affording mechanical support, to prevent germs from sealing against the openings 5c, even when the container is inverted.

It will be understood that the invention is not restricted to the aforedescribed embodiment, given by way of example, and that modifications can be made within the scope of the concept of the invention.

The fact that the illustrated holes 5c comprise concentrical slots only represents an example of a suitable embodiment. As will be understood, a plurality of conical discrete holes can also be used.

Furthermore, the container may have the form of a tube open at both ends thereof. In this case, one end is able to co-act with a tightly closing cover means, while the other end may be arranged to co-act with a cover means according to Figure 3, although both ends of the container may also be provided with a respective cover means according to Figure 3.

8

## CLAIMS

1. A device (1) for producing germs and/or sprouts, comprising a container (2) which is open at at least one end thereof, and a perforated cover means (3) capable of being fitted to the open end of said container, characterized in that the cover means has a conical shape and is provided with holes adjacent the peripheral rim thereof.

2. A device according to Claim 1, characterized in that the cone apex is arranged to face inwardly towards the container.

3. A device according to Claim 1, characterized in that the cone surface remote from the container comprises a plurality of concentrically related edge parts (5a,5b) with mutually adjacent edge parts formed from surfaces diverging from the container . and having holes or slots formed between the edge portions.

4. A device according to Claim 1, characterized in that the cone surface facing the container comprises a plurality of radially extending ribs (6), preferably twelve in number and each alternate rib being shorter than an adjacent rib.

5. A device according to Claim 1, characterized in that the cone surface facing the container and located adjacent the periphery of the cover means comprises a water wetable surface (8,8a,8b).

6. A device according to Claim 1, characterized in that the periphery of the cone surface remote from the container has a plurality of discrete supports (15,16,17,18) arranged therearound.

7. A device according to Claim 6, characterized in that the outer surfaces of the supports are arranged to co-act with a tightly-closing cover means and the inner surfaces of the supports are arranged to co-act with a bottom part of a container.

8. A device according to Claim 1, characterized in that the cone angle is between 80 and 160°, preferably about 120°.

9. A device according to Claim 1, characterized in that the container is made of a transparent material.

10. A device according to Claim 1, characterized in that the cover means comprises a moulded plastics unit.

11. A device according to Claim 1,or Claim 10, characterized in that the cone surface facing the container is planar.

0155923

Fig. 1

Fig. 4

Fig. 2

Fig. 3